# EUROPEAN PATENT APPLICATION

(11) **EP 4 852 257 A1**
(43) Date of publication of application: **09.12.2026**
(21) Application number: 25751374.7
(22) Date of filing: 24.01.2025
(51) Int. Cl.: H02J 1/02

(54) **HARMONIC CURRENT SUPPRESSION METHOD AND APPARATUS, AND ELECTRONIC DEVICE AND STORAGE MEDIUM**

(30) Priority: 06.02.2024 CN 202410172249
(71) Applicant: Contemporary Amperex Future Energy Research Institute (Shanghai) Limited, Shanghai 200241 (CN); Contemporary Amperex Technology Co., Limited, Ningde, Fujian 352100 (CN)
(72) Inventor: LIANG, Liliuyuan, Shanghai 200241 (CN); WEI, Chao, Shanghai 200241 (CN); PENG, Hao, Shanghai 200241 (CN); LIN, Hongfei, Shanghai 200241 (CN); YUAN, Xiaotian, Shanghai 200241 (CN); YU, Dongxu, Shanghai 200241 (CN); LU, Yanhua, Shanghai 200241 (CN); ZONG, Yanyun, Shanghai 200241 (CN)
(74) Representative: Gong, Jinping
(86) International application number: PCT/CN2025/074963
(87) International publication number: WO 2025/167772

(57) **Abstract**

Provided in the present application are a harmonic current suppression method and apparatus, and an electronic device and a storage medium. The method comprises: acquiring an output current in a direct-current line of a direct-current energy storage valve; determining a multi-order harmonic current component on the basis of the output current; generating a harmonic compensation amount on the basis of the multi-order harmonic current component; and inputting the harmonic compensation amount into a direct-current energy storage valve control loop, and determining a modulation voltage value of the direct-current energy storage valve. By means of the method, the multi-order harmonic current component in the direct-current line of the direct-current energy storage valve is actively suppressed at a direct-current side.

## Description

### CROSS-REFERENCE TO RELATED APPLICATIONS

The present application claims priority to Chinese Patent Application (Application No.: 202410172249.4) filed on February 06, 2024 and entitled "HARMONIC CURRENT SUPPRESSION METHOD AND APPARATUS, ELECTRONIC DEVICE, AND STORAGE MEDIUM", which is incorporated herein by reference in its entirety.

### TECHNICAL FIELD

The present application relates to the field of high-voltage energy storage, and in particular, to a harmonic current suppression method and apparatus, an electronic device, and a storage medium.

### BACKGROUND

A direct current energy storage valve and a connected direct current system are generally connected to an alternating current system through a converter. Under normal operating conditions, the three-phase balanced voltage on an alternating current side contains only positive sequence components and does not contain negative sequence components or zero sequence components, and therefore, no harmonic components are present. Under unbalanced grid voltage conditions, due to the presence of positive sequence components, negative sequence components, and direct current components on the alternating current side, the above components superimpose between the phases of the converter to produce positive sequence, negative sequence, and zero sequence voltages at fundamental frequency, double frequency, and other multiple-frequency components. Positive sequence and zero sequence voltages cancel each other between phases, while zero sequence fundamental frequency and double frequency components cannot cancel each other between phases and are transmitted to the direct current side. A double frequency voltage source causes double frequency current on the direct current side. For a direct current energy storage valve, the double frequency current has an adverse effect on the life of a battery.

Currently, multi-order harmonic components are generally detected at the converter on the alternating current side to achieve suppression of multi-order harmonic components. However, performing multi-order harmonic component suppression at the converter on the alternating current side has the problem of complex control strategies.

### SUMMARY

The purpose of embodiments of the present application is to provide a harmonic current suppression method and apparatus, an electronic device, and a storage medium to achieve multi-order harmonic suppression on a direct current side.

According to a first aspect, the present application provides a harmonic current suppression method, including: acquiring an output current on a direct current line of a direct current energy storage valve; determining a multi-order harmonic current component according to the output current; generating a harmonic compensation amount based on the multi-order harmonic current component; and inputting the harmonic compensation amount into a direct current energy storage valve control loop to determine a modulation voltage value of the direct current energy storage valve.

In this embodiment of the present application, the output current on the direct current line of the direct current energy storage valve is acquired, and the multi-order harmonic current component in the output current is determined according to the acquired output current. The harmonic compensation amount for suppressing the multi-order harmonic current component in the direct current line is generated based on the multi-order harmonic current component, the harmonic compensation amount is input into the direct current energy storage valve control loop, and the modulation voltage value of the direct current energy storage valve is calculated and determined by the control loop, thereby achieving active suppression of the multi-order harmonic current component on the direct current line of the direct current energy storage valve from the direct current side.

In an optional embodiment, the generating a harmonic compensation amount based on the multi-order harmonic current component includes: generating a first voltage compensation amount according to the multi-order harmonic current component and a proportionality coefficient; and correspondingly, the inputting the harmonic compensation amount into the direct current energy storage valve control loop to determine the modulation voltage value of the direct current energy storage valve includes: adjusting a reference voltage value input to a voltage control loop within the direct current energy storage valve control loop according to the first voltage compensation amount to obtain a modified reference voltage value; and determining the modulation voltage value of the direct current energy storage valve based on the modified reference voltage value and the direct current energy storage valve control loop.

In this embodiment of the present application, multi-order harmonic suppression is performed in a voltage control loop, the first voltage compensation amount is generated according to the multi-order harmonic current component and the proportionality coefficient, the reference voltage value of the voltage control loop is adjusted according to the first voltage compensation amount, and the direct current energy storage valve control loop determines the modulation voltage value of the direct current energy storage valve based on the modified reference voltage value, thereby achieving multi-order harmonic suppression.

In an optional embodiment, the generating a harmonic compensation amount based on the multi-order harmonic current component includes: using the multi-order harmonic current component as a current compensation amount, the current compensation amount being the harmonic compensation amount; and correspondingly, the inputting the harmonic compensation amount into the direct current energy storage valve control loop to determine the modulation voltage value of the direct current energy storage valve includes: adjusting a reference current value input to a current control loop within the direct current energy storage valve control loop according to the current compensation amount to obtain a modified reference current value; and determining the modulation voltage value of the direct current energy storage valve based on the modified reference current value and the direct current energy storage valve control loop.

In this embodiment of the present application, the multi-order harmonic current component is used as the current compensation amount, the reference current value of the current control loop is adjusted according to the current compensation amount, and the direct current energy storage valve control loop determines the modulation voltage value of the direct current energy storage valve based on the modified reference current value, thereby achieving multi-order harmonic suppression.

In an optional embodiment, the generating a harmonic compensation amount based on the multi-order harmonic current component includes: inputting the multi-order harmonic current component and a multi-order harmonic current component reference value into a regulator to obtain a second voltage compensation amount; and correspondingly, the inputting the harmonic compensation amount into a direct current energy storage valve control loop to determine the modulation voltage value of the direct current energy storage valve includes: adjusting a modulation voltage value output by the current control loop in the direct current energy storage valve control loop according to the second voltage compensation amount to obtain the modulation voltage value of the direct current energy storage valve.

In this embodiment of the present application, the multi-order harmonic current component and the multi-order harmonic current component reference value are input into the regulator to obtain the second voltage compensation amount, the modulation voltage value output by the current control loop is adjusted according to the second voltage compensation amount, and the multi-order harmonic current component is suppressed at the modulation voltage value of the direct current energy storage valve control loop.

In an optional embodiment, the regulator is a proportional regulator, and the inputting the multi-order harmonic current component and the multi-order harmonic current component reference value into a regulator to obtain a second voltage compensation amount includes: determining the second voltage compensation amount according to a proportionality coefficient of the proportional regulator, the multi-order harmonic current component, and the multi-order harmonic current component reference value.

In this embodiment of the present application, the regulator is set as the proportional regulator, and the second voltage compensation amount is determined through the proportional regulator. The proportional regulator has the advantage of fast adjustment speed.

In an optional embodiment, the regulator is a proportional-integral regulator, and the inputting the multi-order harmonic current component and the multi-order harmonic current component reference value into a regulator to obtain a second voltage compensation amount includes: determining the second voltage compensation amount according to the proportionality coefficient and an integral coefficient of the proportional regulator, the multi-order harmonic current component, and the multi-order harmonic current component reference value.

In this embodiment of the present application, the regulator is set as the proportional-integral regulator, and the second voltage compensation amount is determined through the proportional-integral regulator. The proportional-integral regulator has the advantages of high adjustment accuracy and high stability.

In an optional embodiment, the determining a multi-order harmonic current component according to the output current includes: acquiring a passable frequency band of a band-pass filter, where the passable frequency band of the band-pass filter is n times an operating frequency of the output current; and inputting the output current into the band-pass filter to obtain the multi-order harmonic current component output by the band-pass filter.

In this embodiment of the present application, by acquiring the passable frequency band of the band-pass filter, adjusting the allowable pass frequency band of the band-pass filter and filtering the output current, harmonic current components of different orders can be obtained, thereby achieving suppression of harmonic components of different orders with stronger applicability.

According to a second aspect, the present application provides a harmonic current suppression apparatus, including: an acquisition module, configured to acquire an output current on a direct current line of a direct current energy storage valve; a first determination module, configured to determine a multi-order harmonic current component according to the output current; a second determination module, configured to generate a harmonic compensation amount based on the multi-order harmonic current component; a control module, configured to store a direct current energy storage valve control loop; and a third determination module, configured to input the harmonic compensation amount into the control module to determine a modulation voltage value of the direct current energy storage valve.

In an optional embodiment, the second determination module is specifically configured to generate a first voltage compensation amount according to the multi-order harmonic current component and a proportionality coefficient; and the third determination module is specifically configured to adjust a reference voltage value input to a voltage control loop within the direct current energy storage valve control loop according to the first voltage compensation amount to obtain a modified reference voltage value; and the modulation voltage value of the direct current energy storage valve is determined based on the modified reference voltage value and the direct current energy storage valve control loop.

In an optional embodiment, the second determination module is specifically configured to use the multi-order harmonic current component as a current compensation amount; the third determination module is specifically configured to adjust a reference current value input to a current control loop within the direct current energy storage valve control loop according to the current compensation amount to obtain a modified reference current value; and the modulation voltage value of the direct current energy storage valve is determined based on the modified reference current value and the direct current energy storage valve control loop.

In an optional embodiment, the second determination module is specifically configured to input the multi-order harmonic current component and a multi-order harmonic current component reference value into a regulator to obtain a second voltage compensation amount; and the third determination module is specifically configured to adjust a modulation voltage value output by a current control loop within the direct current energy storage valve control loop according to the second voltage compensation amount to obtain the modulation voltage value of the direct current energy storage valve.

In an optional embodiment, the regulator is a proportional regulator, and the second determination module is specifically configured to determine the second voltage compensation amount according to a proportionality coefficient of the proportional regulator, the multi-order harmonic current component, and the multi-order harmonic current component reference value.

In an optional embodiment, the regulator is a proportional regulator, and the second determination module is specifically configured to determine the second voltage compensation amount according to a proportionality coefficient and an integral coefficient of the proportional regulator, the multi-order harmonic current component, and the multi-order harmonic current component reference value.

In an optional embodiment, the first determination module is specifically configured to acquire a passable frequency band of a band-pass filter, where the passable frequency band of the band-pass filter is n times an operating frequency of the output current; and input the output current into the band-pass filter to obtain the multi-order harmonic current component output by the band-pass filter.

According to a third aspect, the present application provides an electronic device, including: a processor, a memory, and a bus, where the processor and the memory communicate with each other through the bus, the memory stores program instructions that can be executed by the processor, and the processor calls the program instructions to perform the method according to any one of the foregoing embodiments.

According to a fourth aspect, the present application provides a computer-readable storage medium, where computer program instructions are stored on the computer-readable storage medium, and when the computer program instructions are read and run by a computer, the method according to any one of the foregoing embodiments is performed.

### BRIEF DESCRIPTION OF DRAWINGS

In order to describe the technical solutions in the embodiments of the present application more clearly, the following briefly describes the accompanying drawings required for describing the embodiments of the present application. It should be understood that the accompanying drawings below show merely some embodiments of the present application, and other related drawings may still be derived from the accompanying drawings.
FIG. 1 is a flowchart of a harmonic current suppression method according to an embodiment of the present application;
FIG. 2 is an equivalent circuit diagram of a direct current energy storage valve according to an embodiment of the present application;
FIG. 3 is a schematic diagram of a direct current energy storage valve control loop according to an embodiment of the present application;
FIG. 4 is a schematic principal diagram of a first type of harmonic current suppression according to an embodiment of the present application;
FIG. 5 is a schematic principal diagram of a second type of harmonic current suppression according to an embodiment of the present application;
FIG. 6 is a schematic principal diagram of a third type of harmonic current suppression according to an embodiment of the present application;
FIG. 7 is a structural block diagram of a harmonic current suppression apparatus according to an embodiment of the present application; and
FIG. 8 is a schematic structural diagram of an electronic device according to an embodiment of the present application.

### DESCRIPTION OF EMBODIMENTS

The following describes the technical solutions in some embodiments of the present application with reference to the accompanying drawings in these embodiments of the present application.

It should be noted that similar reference numerals and letters indicate similar items in the following drawings, and therefore once an item is defined in one drawing, it does not need to be further defined or explained in the subsequent drawings. Meanwhile, in the description of the present application, relational terms such as "first" and "second" herein are only used to distinguish one entity or operation from another entity or operation, and do not necessarily require or imply that there is any such actual relationship or order between these entities or operations. In addition, the terms "comprise", "include", or any other variations thereof are intended to cover non-exclusive inclusions, such that a process, method, article or device including a series of elements not only includes these elements, but also includes other elements which are not expressly listed, or further includes elements which are inherent to such process, method, article or device. Without more constraints, an element preceded by "includes a..." does not preclude the presence of other identical elements in the process, method, article, or apparatus that includes the element.

Furthermore, the term "and/or" in the present application is only an associative relationship for describing associated objects, indicating that three relationships may be present. For example, A and/or B may indicate the following three cases: presence of only A; presence of both A and B; and presence of only B. The term "multiple" means more than two (inclusive).

A high-voltage direct current direct-mounted energy storage valve (hereinafter referred to as a direct current energy storage valve) has a highly modular structure and can meet the requirements of high efficiency, high reliability, economy, and safety. When the direct current energy storage valve is connected to an alternating current system through a converter, an alternating current side correspondingly generates multi-order harmonic current components on a direct current side under asymmetric fault conditions. The multi-order harmonic current components impact a battery in the direct current energy storage valve, thereby reducing the service life of the battery. Currently, the scheme for suppressing multi-order harmonic currents is generally achieved on an alternating current system side. Since the alternating current system side involves multi-phase voltages, there is a problem of complex suppression strategies in the process of multi-order harmonic current suppression on the alternating current system side, and it cannot be directly applied to the control strategy of the direct current energy storage valve.

In the embodiments of the present application, an output current on a direct current line of a direct current energy storage valve is acquired, and a multi-order harmonic current component in the output current is determined according to the acquired output current. A harmonic compensation amount for suppressing the multi-order harmonic current component in the direct current line is generated based on the multi-order harmonic current component, the harmonic compensation amount is input into a direct current energy storage valve control loop, and the modulation voltage value of the direct current energy storage valve is calculated and determined by the control loop, thereby achieving active suppression of the multi-order harmonic current component on the direct current line of the direct current energy storage valve from the direct current side.

The harmonic current suppression method provided by the embodiments of the present application is used to suppress harmonic current of a direct current energy storage valve. The direct current energy storage valve can be arranged in various energy storage systems. The energy storage systems include but are not limited to: energy storage power supply systems such as hydroelectric power plants, thermal power plants, wind power plants, and solar power plants; energy storage systems in electric transportation tools such as electric bicycles, electric motorcycles, and electric vehicles; and energy storage systems in multiple fields such as military equipment, and aerospace.

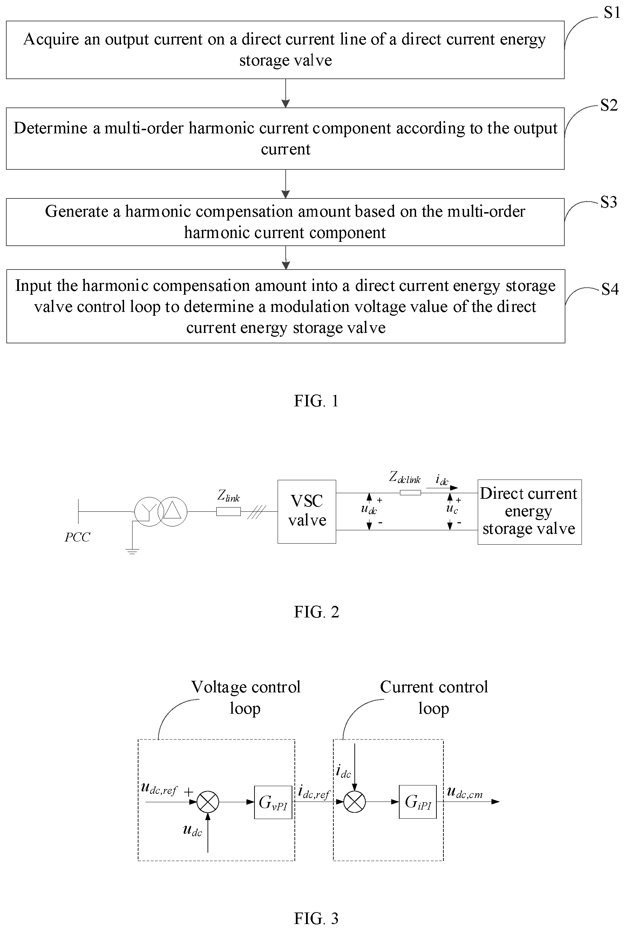

Referring to FIG. 1, FIG. 1 is a flowchart of a harmonic current suppression method according to an embodiment of the present application. The harmonic current suppression method may include the following steps:

S1: Acquire an output current on a direct current line of a direct current energy storage valve.

In this embodiment of the present application, the direct current energy storage valve is connected to a converter. The converter converts direct current output by the direct current energy storage valve into alternating current and inputs the alternating current to an alternating current side, or converts alternating current output by the alternating current side into direct current and inputs the direct current to a direct current side where the direct current energy storage valve is located. The output current on the direct current line of the direct current energy storage valve is the current on the direct current line between the direct current energy storage valve and the converter.

In the case of an asymmetric fault condition on the alternating current side, such as single-phase ground short circuit, two-phase ground short circuit, two-phase short circuit, and the like, negative sequence components appear on the alternating current side, thereby generating multi-order harmonic components between phases on the alternating current side. Correspondingly, the output current on the direct current line of the direct current energy storage valve includes multi-order harmonic currents. The multi-order harmonic currents may include harmonic currents of different orders such as double frequency current and triple frequency current. The variation frequency of the double frequency current is twice the fundamental frequency. For example, if the fundamental frequency is 50 H, the frequency of the double frequency current is 100 Hz, and the frequency of the triple frequency current is 150 Hz.

In some embodiments, the output current on the direct current line of the direct current energy storage valve can be measured and determined by a device capable of measuring current, such as an ammeter or an ampere meter, arranged on the direct current line of the direct current energy storage valve.

In some other embodiments, a management module is provided in the direct current energy storage valve, and the management module can detect in real time the current output on the direct current line of the direct current energy storage valve, and the output current is the output current on the direct current line of the direct current energy storage valve.

S2: Determine a multi-order harmonic current component according to the output current.

In this embodiment of the present application, after acquiring the output current on the direct current line of the direct current energy storage valve, the output current is filtered to determine the multi-order harmonic current component in the output current. The multi-order harmonic current component is a current value of the multi-order harmonic current included in the output current.

As an optional embodiment, the above step S2 may include the following steps:
Acquire a passable frequency band of a band-pass filter, where the passable frequency band of the band-pass filter is n times an operating frequency of the output current; and input the output current into the band-pass filter to obtain the multi-order harmonic current component output by the band-pass filter.

In this embodiment of the present application, the output current is filtered through a band-pass filter to obtain the multi-order harmonic current component in the output current. Since the multi-order harmonic current includes harmonic currents of different orders such as double frequency current and triple frequency current, in the process of harmonic current suppression, the passable frequency set by a user can be received first, and the passable frequency band can be set to n times the operating frequency of the output current, where n may be a positive integer greater than 1 or a decimal less than 1. That is, the passable frequency band may be an integer multiple or a fractional multiple of the operating frequency of the output current. The passable frequency band of the band-pass filter is set to the passable frequency set by the user, so that the band-pass filter can filter the output current to obtain the harmonic current component of the corresponding order.

For example, when harmonic suppression is required for double frequency current, the passable frequency is set to twice the operating frequency. The band-pass filter filters the output current and outputs a double frequency current component. When harmonic suppression is required for triple frequency current, the passable frequency is set to three times the operating frequency. The band-pass filter filters the output current and outputs a triple frequency current component.

By acquiring the passable frequency band of the band-pass filter, adjusting the allowable pass frequency band of the band-pass filter and filtering the output current, harmonic current components of different orders can be obtained, thereby achieving suppression of harmonic components of different orders with stronger applicability.

In addition, the present application does not limit the specific method of determining a multi-order harmonic current component according to the output current. In addition to using a band-pass filter in the above embodiments, other devices, for example, circuit components such as capacitors and inductors can also be used to filter the output current to obtain the multi-order harmonic current component.

S3: Generate a harmonic compensation amount based on the multi-order harmonic current component.

S4: Input the harmonic compensation amount into a direct current energy storage valve control loop to determine a modulation voltage value of the direct current energy storage valve.

In some embodiments, the direct current energy storage valve includes a valve controller (Valve Base Controller, VBC) and multiple submodules. The valve controller is connected to the multiple submodules. The valve controller, as an execution subject of the harmonic current suppression method provided by the embodiments of the present application, determines a modulation voltage value according to the harmonic current suppression method and controls the submodules to output corresponding modulation voltages.

For ease of understanding, steps S3 and S4 are described together below.

In this embodiment of the present application, the harmonic compensation amount is used to suppress the multi-order harmonic current component in the direct current line. After the multi-order harmonic current component is determined through step S2, the harmonic compensation amount is generated based on the multi-order harmonic current component, and the harmonic compensation amount is input into the direct current energy storage valve control loop to achieve active suppression of the multi-order harmonic current component on the direct current line of the direct current energy storage valve.

The equivalent circuit of the direct current energy storage valve is shown in FIG. 2. The direct current energy storage valve is connected to a converter (Voltage Source Converter, VSC). A direct current voltage output by the direct current energy storage valve is *u_{c}*, the output current value of the direct current energy storage valve is *i_{dc}*, a direct current voltage at the connection between the direct current system and the converter is *u_{dc}*, and a direct current circuit impedance is *Z_{dclink}*.

As an optional embodiment, the direct current energy storage valve control loop includes: a voltage control loop and a current control loop. The voltage control loop is configured to determine a reference current value according to a direct current voltage value and a reference voltage value of the direct current energy storage valve. The current control loop is configured to determine the modulation voltage value of the direct current energy storage valve according to an output current value and a reference current value of the direct current energy storage valve.

In this embodiment of the present application, the direct current energy storage valve control loop is shown in FIG. 3. The working principle of the voltage control loop is as follows: a voltage error is obtained by subtracting reference voltage values *u_{dc,ref}* and *u_{dc}*, the voltage error is input into a proportional-integral regulator, and the proportional-integral regulator outputs a reference current value *i_{dc,ref}* according to a voltage control loop transfer function *G_{vPI}*. The reference voltage value *u_{dc,ref}* is a voltage value that the direct current energy storage valve should output under the current working state.

The working principle of the current control loop is as follows: The output current value *i_{dc}* of the direct current energy storage valve is subtracted from the reference current value *i_{dc,ref}* output by the voltage control loop to obtain a current error, the current error is input into a proportional-integral regulator, and the proportional-integral regulator outputs a modulation voltage value *u_{dc,cm}* of the direct current energy storage valve according to the current control loop transfer function *G_{iPI}*.

The three harmonic current suppression strategies provided by the present application input the harmonic compensation amount into the reference voltage value, reference current value, and modulation voltage value of the direct current energy storage valve control loop to achieve harmonic current suppression.

According to the foregoing introduction to multi-order harmonic currents, multi-order harmonic currents may include harmonic currents of different orders such as double frequency current and triple frequency current. The suppression methods for harmonic currents of different orders such as double frequency current and triple frequency current are the same. The three harmonic current suppression strategies provided by the present application are described below by taking the harmonic suppression of double frequency current as an example.

In a first embodiment, a first voltage compensation amount is generated according to the multi-order harmonic current component and a proportionality coefficient; the reference voltage value of the voltage control loop is adjusted according to the first voltage compensation amount to obtain a modified reference voltage value; and the modulation voltage value of the direct current energy storage valve is determined based on the modified reference voltage value and the direct current energy storage valve control loop.

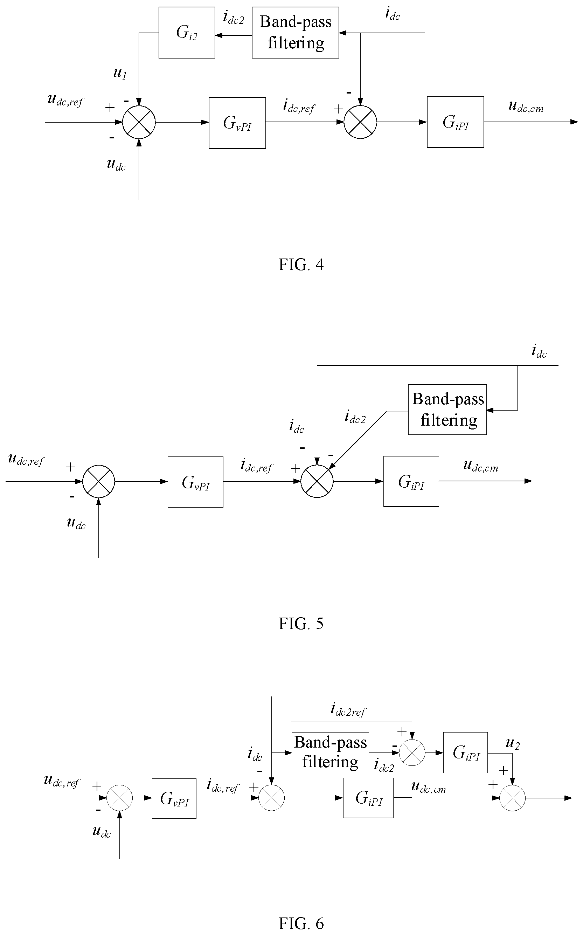

In this embodiment, as shown in FIG. 4, after the output current of the direct current energy storage valve is filtered by a band-pass filter, a double frequency current component *i_{dc2}* is obtained. The double frequency current component *i_{dc2}* is multiplied by a proportionality coefficient *Gᵢ₂* to obtain a first voltage compensation amount *u*₁ (that is, the harmonic compensation amount). The first voltage compensation amount *u*₁ is subtracted from the reference voltage value *u_{dc,ref}* to obtain a modified reference voltage value *u_{dc,ref}*-*u*₁. The direct current energy storage valve control loop determines the modulation voltage value of the direct current energy storage valve according to the modified reference voltage value.

Specifically, the voltage control loop of the direct current energy storage valve control loop subtracts the modified reference voltage value *u_{dc,refnew}* and the direct current voltage *u_{dc}* of the direct current energy storage valve to obtain a voltage error, and inputs the voltage error into a proportional-integral regulator to determine a reference current value *i_{dc,ref}*. The current control loop subtracts the reference current value *i_{dc,ref}* output by the voltage control loop and the output current value *i_{dc}* of the direct current energy storage valve to obtain a current error, and inputs the current error into a proportional-integral regulator to determine a modulation voltage value *u_{dc,cm}* of the direct current energy storage valve.

The value of the proportionality coefficient *Gᵢ₂* may be an empirical value or an appropriate value determined through a large number of experiments. The experimental process is as follows: Different proportionality coefficients are set, the proportion of double frequency current to direct current in the output current output by the direct current energy storage valve under the action of different proportionality coefficients is compared, thereby determining the proportionality coefficient *Gᵢ₂* corresponding to the case where the proportion of double frequency current to direct current is minimized.

Through the above manner, the first voltage compensation amount is generated according to the multi-order harmonic current component and the proportionality coefficient, the reference voltage value of the voltage control loop is adjusted according to the first voltage compensation amount, and the direct current energy storage valve control loop determines the modulation voltage value of the direct current energy storage valve based on the modified reference voltage value, thereby achieving multi-order harmonic suppression.

In a second embodiment, the multi-order harmonic current component is used as a current compensation amount; the reference current value of the current control loop is adjusted according to the current compensation amount to obtain a modified reference current value; and the modulation voltage value of the direct current energy storage valve is determined based on the modified reference current value and the direct current energy storage valve control loop.

In this embodiment, as shown in FIG. 5, after the output current of the direct current energy storage valve is filtered by the band-pass filter, a double frequency current component *i_{dc2}* is obtained. The double frequency current component *i_{dc2}* is used as a harmonic current compensation amount (that is, the harmonic compensation amount). The double frequency current component *i_{dc2}* is subtracted from the reference current value *i_{dc,ref}* to obtain a modified reference current value *i_{dc,ref}* -*i_{dc2}*. The direct current energy storage valve control loop determines the modulation voltage value of the direct current energy storage valve according to the modified reference voltage value.

Specifically, in this embodiment, the processing of the voltage control loop of the direct current energy storage valve control loop is not modified. The working mode of the voltage control loop can refer to the description in the foregoing embodiments, details are not described herein again. After the voltage control loop outputs the reference current *i_{dc,ref}*, the reference current *i_{dc,ref}* is adjusted according to the double frequency current component *i_{dc2}*, the reference current *i_{dc,ref}* is modified to the reference current value *i_{dc,ref}* -*i_{dc2}*, the current control loop subtracts the modified reference current value *i_{dc,ref}* -*i_{dc2}* and the output current value *i_{dc}* of the direct current energy storage valve to obtain the current error, and inputs the current error into a proportional-integral regulator to determine the modulation voltage value *u_{dc,cm}* of the direct current energy storage valve.

Through the above manner, the multi-order harmonic current component is used as the current compensation amount, the reference current value of the current control loop is adjusted according to the current compensation amount, and the direct current energy storage valve control loop determines the modulation voltage value of the direct current energy storage valve based on the modified reference current value, thereby achieving multi-order harmonic suppression.

In a third embodiment, the multi-order harmonic current component and the multi-order harmonic current component reference value are input into a regulator to obtain a second voltage compensation amount; and the modulation voltage value output by a current control loop is adjusted according to the second voltage compensation amount to obtain the modulation voltage value of the direct current energy storage valve.

In this embodiment, a regulator is set, and the regulator determines the second voltage compensation amount according to the multi-order harmonic current component and the multi-order harmonic current component reference value. The second voltage compensation amount is input to the modulation voltage value of the direct current energy storage valve control loop, and the modulation voltage value output by the current control loop is adjusted, thereby achieving harmonic current suppression.

In some embodiments, the regulator may be a proportional regulator, and the second voltage compensation amount is determined according to a proportionality coefficient of the proportional regulator, the multi-order harmonic current component, and the multi-order harmonic current component reference value.

A second compensation amount can be determined by the following formula: ${u}_{2} = {k}_{p} \left({i}_{dc n ref}-{i}_{dc n}\right) ;$ where u₂ is the second voltage compensation amount, *i*_{*dc*n*ref*} is the multi-order harmonic current component reference value, *i*_{*dc*n} is the multi-order harmonic current component, and *kₚ* is the proportionality coefficient of the proportional regulator. In order to suppress multi-order harmonic components, the multi-order harmonic current component reference value *i*_{*dc*2*ref*} is set to 0.

In other embodiments, the regulator may be a proportional-integral regulator, and the second voltage compensation amount is determined according to the proportionality coefficient of the proportional regulator, the multi-order harmonic current component, and the multi-order harmonic current component reference value.

The second voltage compensation amount can be determined by the following formula: ${u}_{2} = {k}_{p} \left({i}_{dc n ref}-{i}_{dc n}\right) + {k}_{i} \int \left({i}_{dc n ref}-{i}_{dc n}\right) dt ;$ where u₂ is the second voltage compensation amount, *i*_{*dc*n*ref*} is the multi-order harmonic current component reference value, *i*_{*dc*n} is the multi-order harmonic current component, *kₚ* is the proportionality coefficient of the proportional-integral regulator, and *kᵢ* is the integral coefficient of the proportional-integral regulator. In order to suppress multi-order harmonic components, the multi-order harmonic current component reference value *i*_{*dc*2*ref*} is set to 0.

As shown in FIG. 6, in the case of suppressing double frequency current, n in *i*_{*dc*n*ref*} and *i*_{*dc*n} is taken as 2, that is, the double frequency current component reference value is *i*_{*dc*2*ref*} , and the double frequency current component is *i*_{*dc*2}. After the output current of the direct current energy storage valve is filtered by the band-pass filter, the double frequency current component *i_{dc2}* is obtained. The double frequency current component reference value *i*_{*dc*2*ref*} is subtracted from the double frequency current component *i_{dc2}* to obtain a double frequency current error. The double frequency current error is input into the proportional-integral regulator, and the proportional-integral regulator calculates and determines the second voltage compensation amount u₂ according to the above formula.

This embodiment does not modify the processing of the voltage control loop and current control loop of the direct current energy storage valve control loop. The working modes of the voltage control loop and current control loop may refer to the description in the foregoing embodiments, details are not described herein again. After the current control loop outputs a modulation voltage *u_{dc,cm}*, the modulation voltage *u_{dc,cm}* output by the current control loop is adjusted according to the second voltage compensation amount u₂. The adjustment manner is to add the modulation voltage *u_{dc,cm}* output by the current control loop to the second voltage compensation amount u₂ to obtain the modulation voltage value of the direct current energy storage valve.

Through the above manner, the multi-order harmonic current component and the multi-order harmonic current component reference value are input into a regulator to obtain the second voltage compensation amount, the modulation voltage value output by the current control loop is adjusted according to the second voltage compensation amount, and the multi-order harmonic current component is suppressed at the modulation voltage value of the direct current energy storage valve control loop.

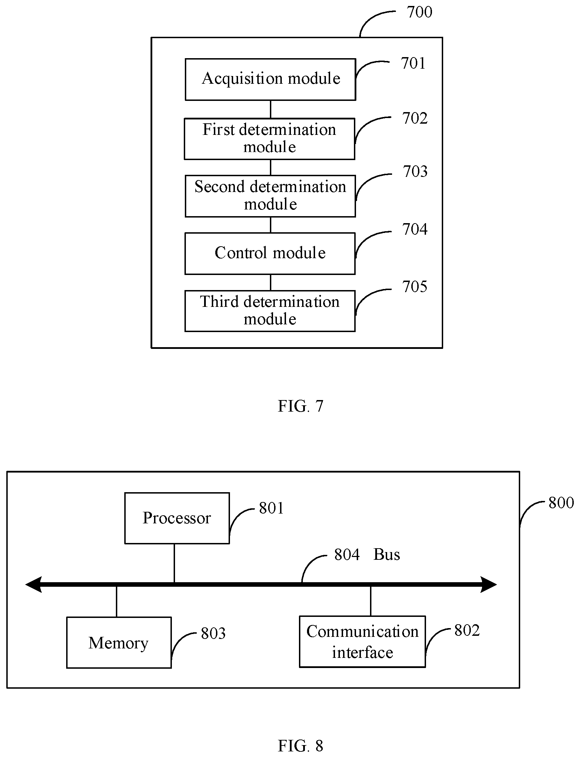

The embodiments of the present application also provide a harmonic current suppression apparatus. Referring to FIG. 7, FIG. 7 is a structural block diagram of a harmonic current suppression apparatus according to an embodiment of the present application. The harmonic current suppression apparatus 700 includes: an acquisition module 701, configured to acquire an output current on a direct current line of a direct current energy storage valve; a first determination module 702, configured to determine a multi-order harmonic current component according to the output current; a second determination module 703 configured to generate a harmonic compensation amount based on the multi-order harmonic current component; a control module 704, configured to store a direct current energy storage valve control loop; and a third determination module 705, configured to input the harmonic compensation amount into the control module to determine a modulation voltage value of the direct current energy storage valve.

In an optional embodiment, the second determination module 703 is specifically configured to generate a first voltage compensation amount according to the multi-order harmonic current component and a proportionality coefficient; the third determination module 705 is specifically configured to adjust a reference voltage value input to a voltage control loop within the direct current energy storage valve control loop according to the first voltage compensation amount to obtain a modified reference voltage value; and the modulation voltage value of the direct current energy storage valve is determined based on the modified reference voltage value and the direct current energy storage valve control loop.

In an optional embodiment, the second determination module 703 is specifically configured to use the multi-order harmonic current component as a current compensation amount; the third determination module 705 is specifically configured to adjust a reference current value input to a current control loop within the direct current energy storage valve control loop according to the current compensation amount to obtain a modified reference current value; and the modulation voltage value of the direct current energy storage valve is determined based on the modified reference current value and the direct current energy storage valve control loop.

In an optional embodiment, the second determination module 703 is specifically configured to input the multi-order harmonic current component and a multi-order harmonic current component reference value into a regulator to obtain a second voltage compensation amount; and the third determination module 705 is specifically configured to adjust a modulation voltage value output by a current control loop within the direct current energy storage valve control loop according to the second voltage compensation amount to obtain the modulation voltage value of the direct current energy storage valve.

In an optional embodiment, the regulator is a proportional regulator, and the second determination module 703 is specifically configured to determine the second voltage compensation amount according to a proportionality coefficient of the proportional regulator, the multi-order harmonic current component and the multi-order harmonic current component reference value.

In an optional embodiment, the regulator is a proportional regulator, and the second determination module 703 is specifically configured to determine the second voltage compensation amount according to a proportionality coefficient and an integral coefficient of the proportional regulator, the multi-order harmonic current component, and the multi-order harmonic current component reference value.

In an optional embodiment, the first determination module 702 is specifically configured to acquire a passable frequency band of a band-pass filter, where the passable frequency band of the band-pass filter is n times an operating frequency of the output current; and input the output current into the band-pass filter to obtain the multi-order harmonic current component output by the band-pass filter.

Referring to FIG. 8, FIG. 8 is a schematic structural diagram of an electronic device according to an embodiment of the present application. The electronic device 800 includes: at least one processor 801, at least one communication interface 802, at least one memory 803, and at least one bus 804. The bus 804 is used to achieve direct connection and communication among these components. The communication interface 802 is used to perform signaling or data communication with other node devices. The memory 803 stores machine-readable instructions executable by the processor 801. When the electronic device 800 is running, the processor 801 is in communication with the memory 803 through the bus 804. When the machine-readable instructions are called by the processor 801, the harmonic current suppression method described above is performed.

The processor 801 may be an integrated circuit chip with signal processing capability. The above processor 801 may be a general-purpose processor, including a central processing unit (Central Processing Unit, CPU), a network processor (Network Processor, NP), or the like; it may also be a digital signal processor (Digital Signal Processing, DSP), an application specific integrated circuit (Application Specific Integrated Circuit, ASIC), a field-programmable gate array (Field-Programmable Gate Array, FPGA) or other programmable logic devices, a discrete gate or transistor logic device, a discrete hardware component, or the like. The methods, steps, and logical block diagrams disclosed in the embodiments of the present application can be implemented or executed. The general-purpose processor may be a microprocessor or any conventional processor.

The memory 803 may include, but is not limited to, a random access memory (Random Access Memory, RAM), a read only memory (Read Only Memory, ROM), a programmable read-only memory (Programmable Read-Only Memory, PROM), an erasable programmable read-only memory (Erasable Programmable Read-Only Memory, EPROM), an electrically erasable programmable read-only memory (Electric Erasable Programmable Read-Only Memory, EEPROM), or the like.

It can be understood that the structure shown in FIG. 8 is for illustration only, and the electronic device 800 may also include more or fewer components than those shown in FIG. 8, or have a configuration different from that shown in FIG. 8. The components shown in FIG. 8 can be implemented by hardware, software, or a combination thereof. In the embodiments of the present application, the electronic device 800 may be a device for controlling the voltage output by the direct current energy storage valve, specifically, it may be a physical device such as a desktop computer, a notebook computer, a smartphone, a smart wearable device, a vehicle-mounted device, or the like, or may be a virtual device such as a virtual machine. In addition, the electronic device 800 is not necessarily a single device, but may also be a combination of multiple devices, such as a server cluster, or the like.

In addition, the embodiments of the present application also provide a computer-readable storage medium. The computer storage medium stores a computer program. When the computer program is run by a computer, the steps of the harmonic current suppression method in the above embodiments are performed.

In the embodiments provided in the present application, it should be understood that the disclosed apparatus and method can be implemented in other manners. The described apparatus embodiments are merely illustrative. For example, the unit division is merely logical function division and other division manners may be used in actual implementation. For example, a plurality of units or components may be combined or integrated into another system, or some features may be ignored or not be performed. In addition, the displayed or discussed mutual couplings or direct couplings or communications connections may be implemented by using some interfaces. The indirect couplings or communications connections between the apparatuses, modules, or units may be implemented in electronic, mechanical, or other forms.

In addition, the units described as separate parts may or may not be physically separated. Parts displayed as units may or may not be physical units, meaning they may be located in one position or distributed on a plurality of network units. Some or all of the units may be selected depending on actual requirements to achieve the objectives of the solutions in the embodiments.

Furthermore, each functional module in each embodiment of the present application may be integrated together to form an independent part, each module may also independently exist, two or more than two modules may also be integrated into an independent part.

It should be noted that when the functions are implemented in a form of a software functional module and sold or used as an independent product, the functions may be stored in a computer-readable storage medium. Based on such an understanding, the technical solutions of the application substantially or parts making contributions to the conventional art or part of the technical solutions may be embodied in a form of a software product. The computer software product is stored in a storage medium and includes several instructions for instructing a computer device (which may be a personal computer, a server, a network device, or the like) to perform all or some of the steps of the methods described in the embodiments of this application. The aforementioned storage medium includes various media capable of storing program codes such as a U disk, a mobile hard disk, a read-only memory (Read-Only Memory, ROM), a random access memory (Random Access Memory, RAM), a magnetic disk, or an optical disk.

The foregoing descriptions are merely the embodiments of the present application, but are not intended to limit the protection scope of the present application. Persons skilled in the art understand that the present application may have various modifications and variations. Any modification, equivalent replacement, or improvement made without departing from the spirit and principle of the present application shall fall within the protection scope of the present application.

## Claims

1. A harmonic current suppression method, comprising:
acquiring an output current on a direct current line of a direct current energy storage valve;
determining a multi-order harmonic current component according to the output current;
generating a harmonic compensation amount based on the multi-order harmonic current component; and
inputting the harmonic compensation amount into a direct current energy storage valve control loop to determine a modulation voltage value of the direct current energy storage valve.

2. The harmonic current suppression method according to claim 1, wherein the generating a harmonic compensation amount based on the multi-order harmonic current component comprises:
generating a first voltage compensation amount according to the multi-order harmonic current component and a proportionality coefficient; and
correspondingly, the inputting the harmonic compensation amount into a direct current energy storage valve control loop to determine a modulation voltage value of the direct current energy storage valve comprises:
adjusting a reference voltage value input to a voltage control loop within the direct current energy storage valve control loop according to the first voltage compensation amount to obtain a modified reference voltage value; and
determining the modulation voltage value of the direct current energy storage valve based on the modified reference voltage value and the direct current energy storage valve control loop.

3. The harmonic current suppression method according to claim 1, wherein the generating a harmonic compensation amount based on the multi-order harmonic current component comprises:
using the multi-order harmonic current component as a current compensation amount, the current compensation amount being the harmonic compensation amount; and
correspondingly, the inputting the harmonic compensation amount into a direct current energy storage valve control loop to determine a modulation voltage value of the direct current energy storage valve comprises:
adjusting a reference current value input to a current control loop within the direct current energy storage valve control loop according to the current compensation amount to obtain a modified reference current value; and
determining the modulation voltage value of the direct current energy storage valve based on the modified reference current value and the direct current energy storage valve control loop.

4. The harmonic current suppression method according to claim 1, wherein the generating a harmonic compensation amount based on the multi-order harmonic current component comprises:
inputting the multi-order harmonic current component and a multi-order harmonic current component reference value into a regulator to obtain a second voltage compensation amount; and
correspondingly, the inputting the harmonic compensation amount into a direct current energy storage valve control loop to determine a modulation voltage value of the direct current energy storage valve comprises:
adjusting a modulation voltage value output by a current control loop within the direct current energy storage valve control loop according to the second voltage compensation amount to obtain the modulation voltage value of the direct current energy storage valve.

5. The harmonic current suppression method according to claim 4, wherein the regulator is a proportional regulator, and the inputting the multi-order harmonic current component and a multi-order harmonic current component reference value into a regulator to obtain a second voltage compensation amount comprises:
determining the second voltage compensation amount according to a proportionality coefficient of the proportional regulator, the multi-order harmonic current component, and the multi-order harmonic current component reference value.

6. The harmonic current suppression method according to claim 4, wherein the regulator is a proportional-integral regulator, and the inputting the multi-order harmonic current component and a multi-order harmonic current component reference value into a regulator to obtain a second voltage compensation amount comprises:
determining the second voltage compensation amount according to a proportionality coefficient and an integral coefficient of the proportional regulator, the multi-order harmonic current component, and the multi-order harmonic current component reference value.

7. The harmonic current suppression method according to any one of claims 1 to 6, wherein the determining a multi-order harmonic current component according to the output current comprises:
acquiring a passable frequency band of a band-pass filter, wherein the passable frequency band of the band-pass filter is n times an operating frequency of the output current; and
inputting the output current into the band-pass filter to obtain the multi-order harmonic current component output by the band-pass filter.

8. A harmonic current suppression apparatus, comprising:
an acquisition module, configured to acquire an output current on a direct current line of a direct current energy storage valve;
a first determination module, configured to determine a multi-order harmonic current component according to the output current;
a second determination module, configured to generate a harmonic compensation amount based on the multi-order harmonic current component;
a control module, configured to store a direct current energy storage valve control loop; and
a third determination module, configured to input the harmonic compensation amount into the control module to determine a modulation voltage value of the direct current energy storage valve.

9. An electronic device, comprising: a processor, a memory, and a bus, wherein the processor and the memory communicate with each other through the bus, the memory stores program instructions that can be executed by the processor, and the processor calls the program instructions to perform the method according to any one of claims 1 to 7.

10. A computer-readable storage medium, wherein computer program instructions are stored on the computer-readable storage medium, and when the computer program instructions are read and run by a computer, the method according to any one of claims 1 to 7 is performed.
